# EUROPEAN PATENT APPLICATION

(11) **EP 2 269 904 A1**
(43) Date of publication of application: **05.01.2011**
(21) Application number: 09164459.1
(22) Date of filing: 02.07.2009
(51) Int. Cl.: B62M 1/08, F16D 41/26

(54) **Gear assembly for transportation tools**

(71) Applicant: Laing Ban International Inc., Sinjhuang City, Taipei County 242 (TW)
(72) Inventor: Huang, Wen-Hung, 220, Taipei County (TW)
(74) Representative: Dossmann, Gérard

(57) **Abstract**

A gear assembly includes a ring gear (1) mounted to a body (2) and a pawl (24) biased by a spring is engaged with ratchet teeth in the inner periphery of the ring gear (1). A control lever (25) is fixed to an end of the pawl (24) by a link (243) so as to disengage the pawl (24) from the ratchet teeth by rotating the control lever (25). A shaft (31) extends through the body and is fixed to a driving gear (6). The ring gear is connected with a wheel of the transportation tool. A coil spring (4) is connected between the shaft (3) and the body (2) to provide a force to return the body (2). The driving gear (6) is driven by a transmission device of the transportation tool and the driving gear drives the ring gear to rotate the wheel forward. The wheel can be rotated backward by operation of the control lever to disengage the pawl from the ratchet teeth.

## Description

The present invention relates to a gear assembly for transportation tools, and more particularly, to a gear assembly which is able to rotate in clockwise and counter clockwise directions.

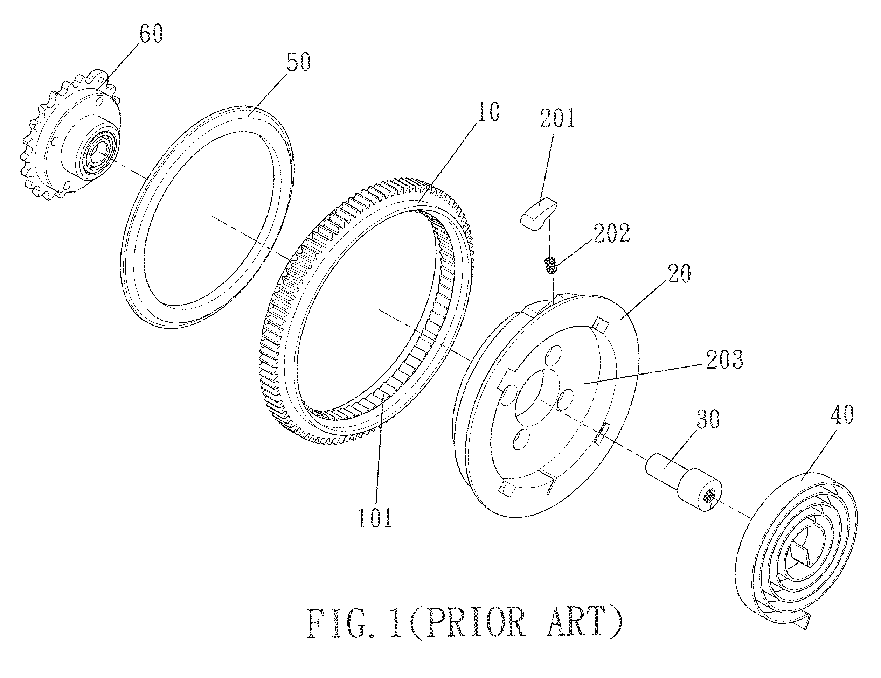

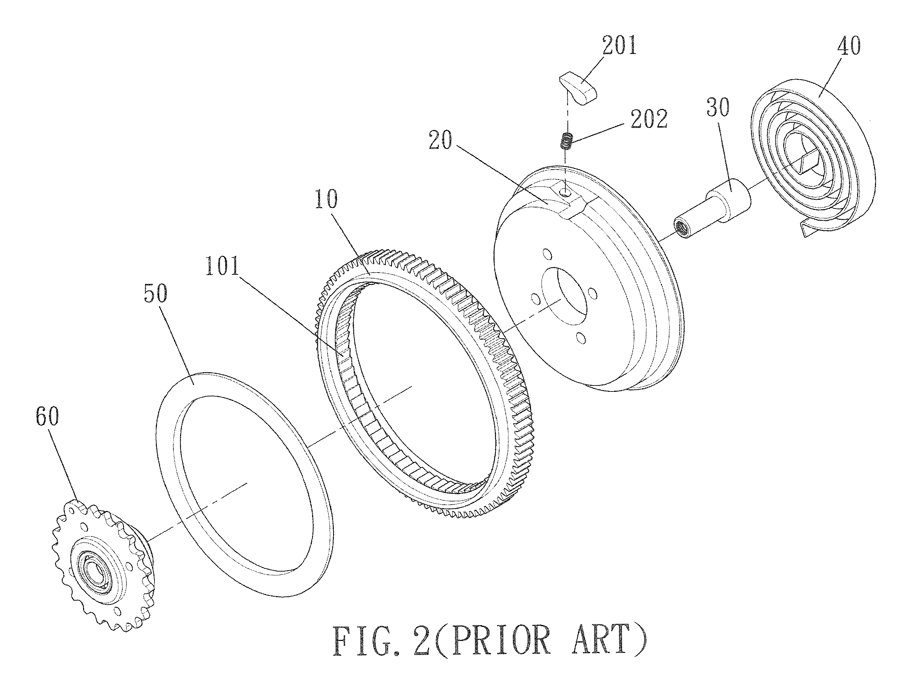

A conventional gear assembly for transportation tools such as bicycles or scooters is shown in Figs. 1 and 2, and generally includes a ring gear 10, a body 20, a shaft 30, a coil spring 40, a cover 50 and a driving gear 60, wherein the ring gear 10 includes outer teeth and ratchet teeth 101 are defined in an inner periphery of the ring gear 10. The ring gear 10 is mounted to the body 20 which has a pawl 201 pivotably connected to an outer periphery thereof and biased by a spring 202. The pawl 201 is engaged with the ratchet teeth 101. The body 20 includes a recessed area 203 defined in the first side thereof and the coil spring 40 is received in the recessed area 203. The shaft 30 extends through the body 20 and fixed to the driving gear 60 located on the second side of the body 20. The coil spring 40 has one end fixed to an inner periphery of the recessed area 203 and the other end of the coil spring 40 is fixed to the shaft 30. The cover 50 is connected to the second side of the body 20. The transmission device 70 of the transportation tool is engaged with the driving gear 60 and the ring gear 10 is connected to the wheel (not shown) of the transportation tool.

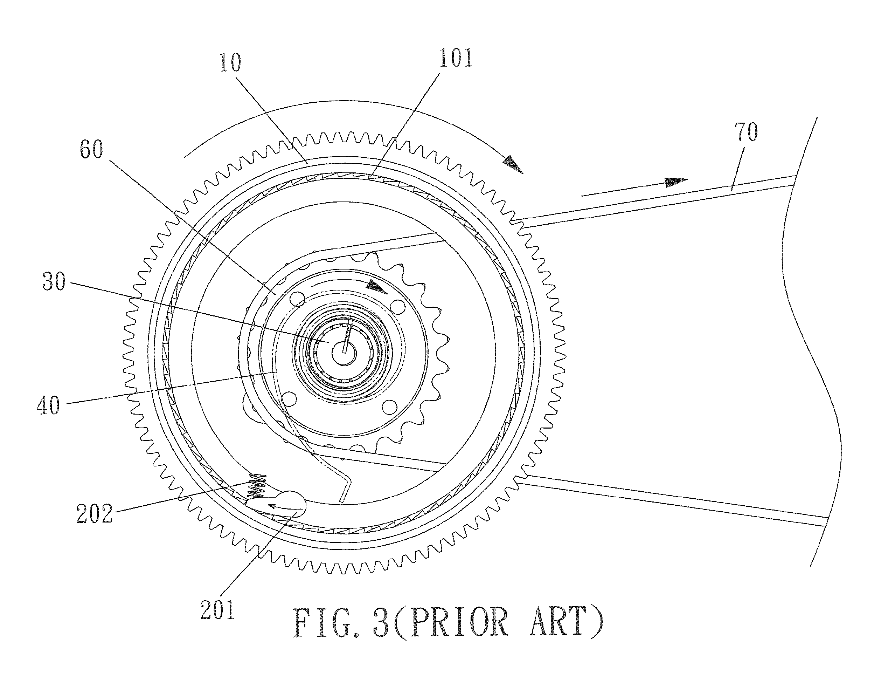

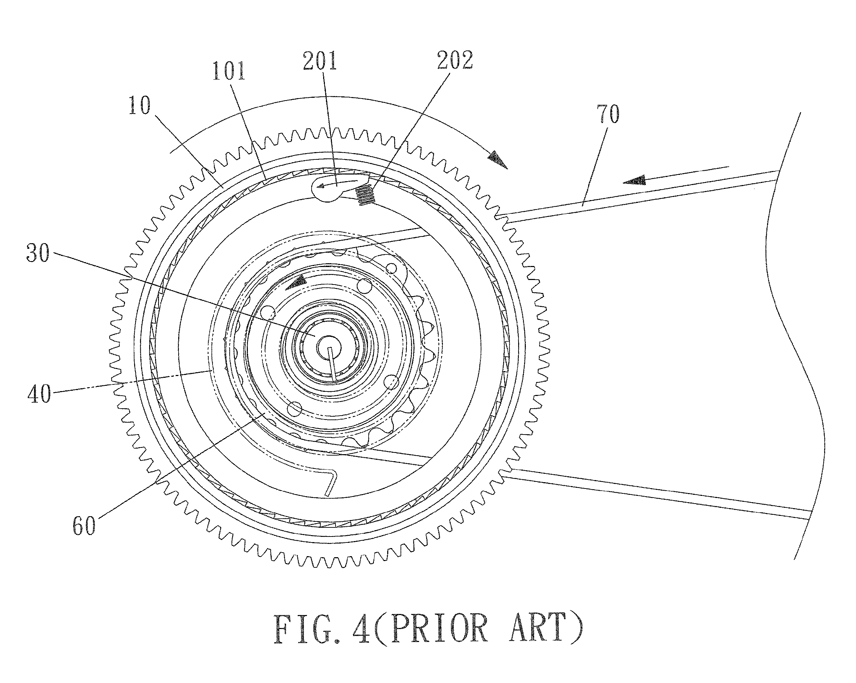

When the transmission device 70 drives the driving gear 60 in clockwise direction as shown in Fig. 3, the driving gear 60 drives the body 20 via the shaft 30 and the pawl 201 is engaged with the ratchet teeth 101 of the ring gear 10, so that the wheel moves forward. The coil spring 40 is in tightened status. When the transmission device 70 moves in opposite direction as shown in Fig. 4, the coil spring 40 releases and the body 20 rotates in counter clockwise. The pawl 201 is not engaged with the ratchet teeth 101 so that the driving gear 20 cannot drive the ring gear 10 until the transmission device 70 drives the driving gear 60 as shown in Fig. 3.

It is understood that the ring gear 10 can only be driven in one direction to move the wheel forward because the pawl 101 is engaged with the ratchet teeth 101 in one direction. When the wheel rotates backward, the pawl 201 is engaged with the ratchet teeth 101 again. Because the force of the ring gear 10 is not sufficient to drive the body 20, the coil spring 40, the shaft 30 and the driving gear 60, so that the wheel will be stocked. In other words, the conventional gear assembly cannot allow the wheel to be rotated backward, this is not convenient for the users.

The present invention intends to provide a gear assembly for transportation tool and the gear assembly allows the wheel of the transportation tool to rotate in two directions.

The present invention relates to a gear assembly which comprises a ring gear having teeth defined in an outer periphery thereof and ratchet teeth are defined in an inner periphery of the ring gear. A body has a protrusion extending from a first side thereof and the protrusion includes a recess defined in an outer periphery thereof. A notch is defined in an inner end of the recess and a spring is located in the notch. A pawl is pivotably located in the recess and biased by the spring. The ring gear is mounted to the protrusion and the pawl is engaged with the ratchet teeth. The pawl includes a link which extends through the body and is fixed to an end of a control lever such that the pawl is disengaged from the ratchet teeth by rotating the control lever. A shaft extends through the body and is fixed to a driving gear which is located on the first side of the body. A coil spring is received in the recessed area and has a first end fixed to the shaft. A second end of the coil spring is fixed to the body. A cover is connected to the first side of the body.

The primary object of the present invention is to provide a gear assembly which allows the wheel of the bicycle or scooter to be rotated in two directions.

The present invention will become more obvious from the following description when taken in connection with the accompanying drawings which show, for purposes of illustration only, a preferred embodiment in accordance with the present invention.
Fig. 1 is an exploded view to show a conventional gear assembly;
Fig. 2 is another exploded view to show the conventional gear assembly;
Fig. 3 shows that the transmission device drives the ring gear and the body and the driving gear of the conventional gear assembly are rotated forward;
Fig. 4 shows that the coil spring releases and the ring gear and the body and the driving gear of the conventional gear assembly are rotated backward;
Fig. 5 is an exploded view to show the gear assembly of the present invention;
Fig. 6 is another exploded view to show the gear assembly of the present invention;
Fig. 7 is a perspective view to show the gear assembly of the present invention;
Fig. 8 shows that the pawl is not engaged with the ratchet teeth of the ring gear and the body is freely rotated in both directions;
Fig. 9 shows that the transmission device drives the ring gear and the body and the driving gear of the gear assembly of the present invention are rotated forward;
Fig. 10 shows that the body together with the pawl are rotated to another position;
Fig. 11 shows that the body together with the driving gear are rotated counter clockwise;
Fig. 12 shows that the ring gear has different shape of the teeth on the outer periphery thereof;
Fig. 13 is an exploded view to show another embodiment of the gear assembly of the present invention;
Fig. 14 is a perspective view to show the second embodiment of the gear assembly of the present invention, and
Fig. 15 shows that the body of the second embodiment of the gear assembly of the present invention is freely rotated in both directions.

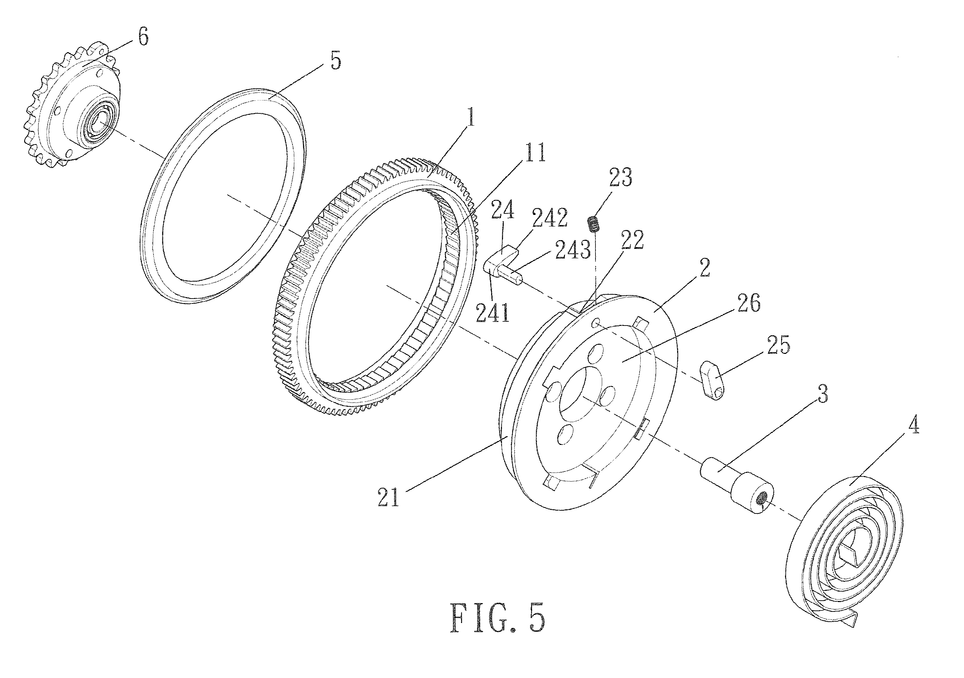

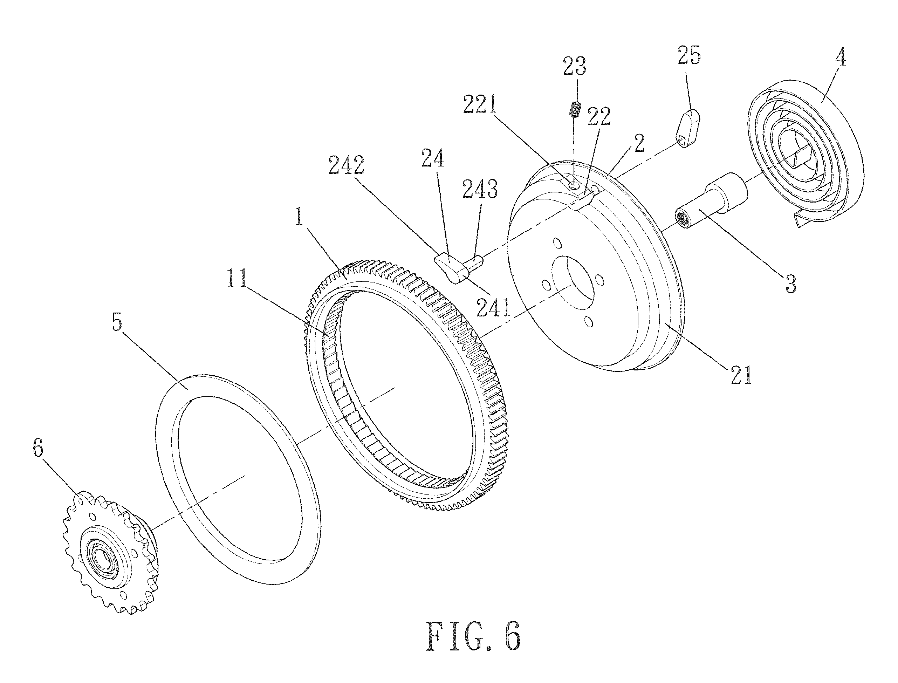

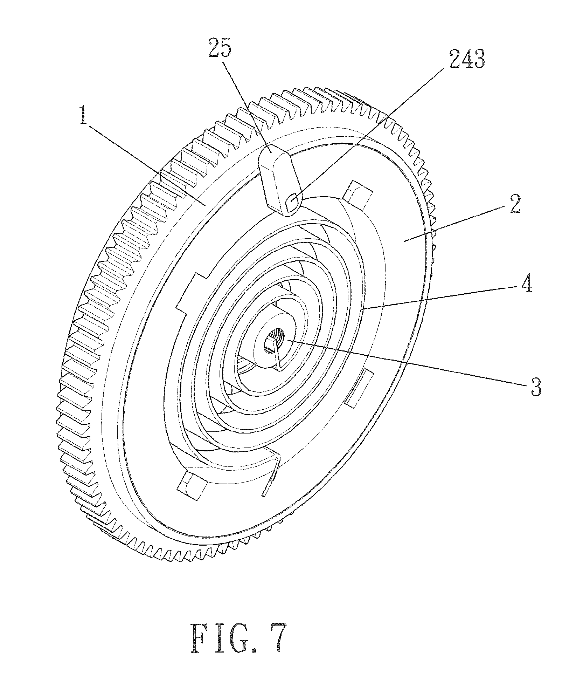

Referring to Figs. 5 to 7, the gear assembly for bicycles, scooters or the like which includes a transmission device cooperated with the gear assembly to drive the wheels of the bicycles or scooters. The gear assembly of the present invention can be made by steel, iron, aluminum, titanium, carbon fibers, glass fibers, plastic or any known composite material. The gear assembly of the present invention comprises a ring gear 1 which has teeth defined in an outer periphery thereof and ratchet teeth 11 are defined in an inner periphery of the ring gear 1.

A circular body 2 includes a protrusion 21 extending from a first side thereof and a recessed area 26 is defined in a second side of the body 2. The protrusion 21 has a recess 22 defined in an outer periphery thereof and a notch 221 is defined in an inner end of the recess 22. A pawl 24 is pivotably located in the recess 22 and includes a connection end 241 and an engaging end 242. A link 243 extends from the connection end 241 and through the body 2 and is fixed to an end of a control lever 25 which is located on the first side of the body 2. A spring 23 is located in the notch 221 and the pawl 24 is biased by the spring 23 such that the engaging end 242 is engaged with the ratchet teeth 11 of the ring gear 1.

A shaft 3 extends through the body 2 and is fixed to a driving gear 6 which is located on the first side of the body 2. A coil spring 4 is received in the recessed area 26 and has a first end fixed to the shaft 3 and a second end of the coil spring 4 is fixed to the body 2. A cover 5 connected to the first side of the body 2.

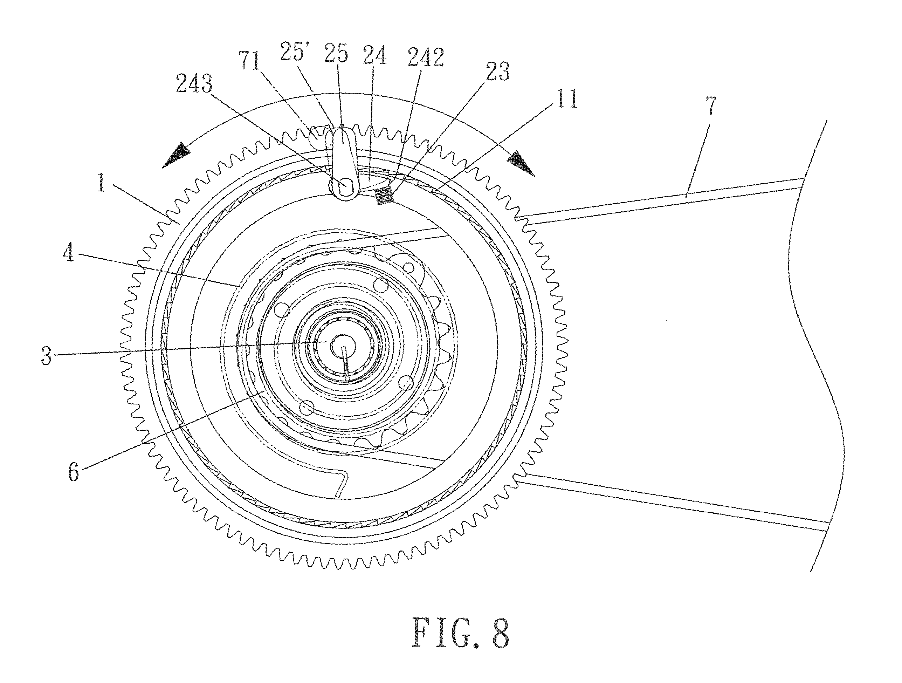

As shown in Fig. 8, the transmission device 7 of the bicycle or scooter is engaged with the driving gear 6 and a push device 71 is connected to the bicycle or scooter. The wheel (not shown) of the bicycle or scooter is connected to the ring gear 1. The push device 71 pushes the control lever 25 an angle so as to pivot the pawl 24 to be disengaged from the ratchet teeth 11, such that the wheel can be freely rotated in clockwise and counter clockwise directions. The dotted line shows the position 25' of the control lever 25 which is not pushed by the push device 71 and at this position, the pawl 24 is engaged with the ratchet teeth 11.

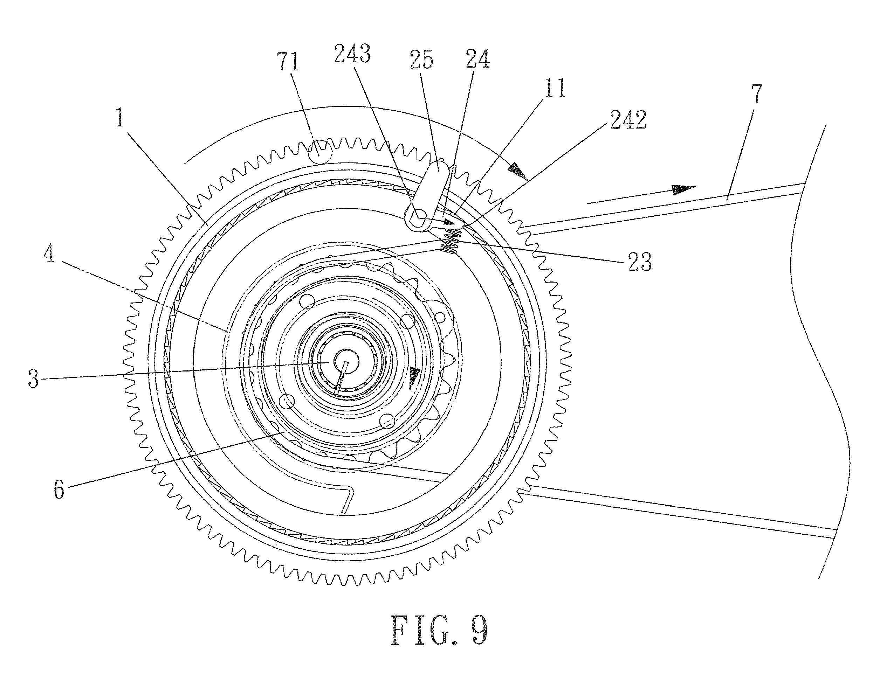

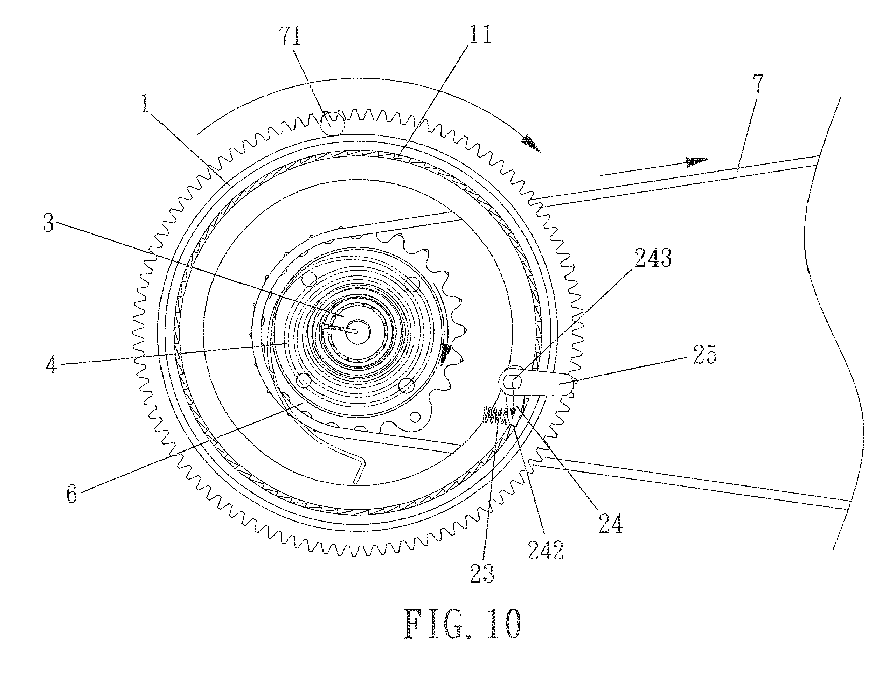

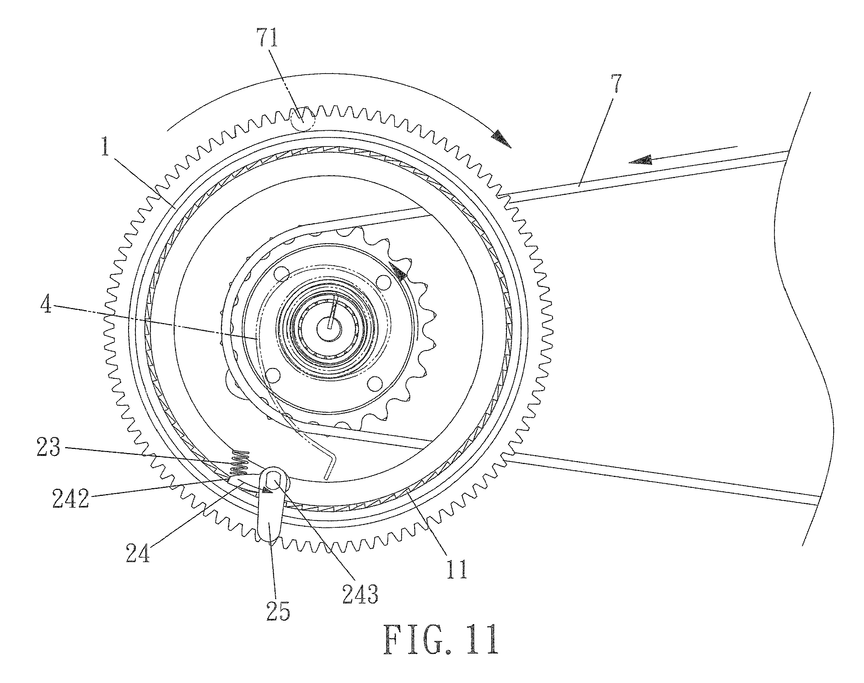

As shown in Figs. 9 and 10, when the transmission device 7 is operated to rotate the driving gear 6, the driving gear 6, the shaft 3, the coil spring 4 and the body 2 are rotated clockwise. The control lever 25 removes from the push device 71 when the body 2 rotates so that the pawl 24 is pushed by the spring 23 and engaged with the ratchet teeth 11 and drives the ring gear 1. The rotation of the ring gear 1 drives the driving gear 6 and the wheel to move the bicycle or scooter forward. When the transmission device 7 does not apply force to the driving gear 6, as shown in Fig. 11, the coil spring 4 releases its energy to rotate the shaft 3, the driving gear 6 and the body 2. The pawl 24 cannot drive the ring gear 1 so that the ring gear 1 still rotates in clockwise direction until the status disclosed in Fig. 8.

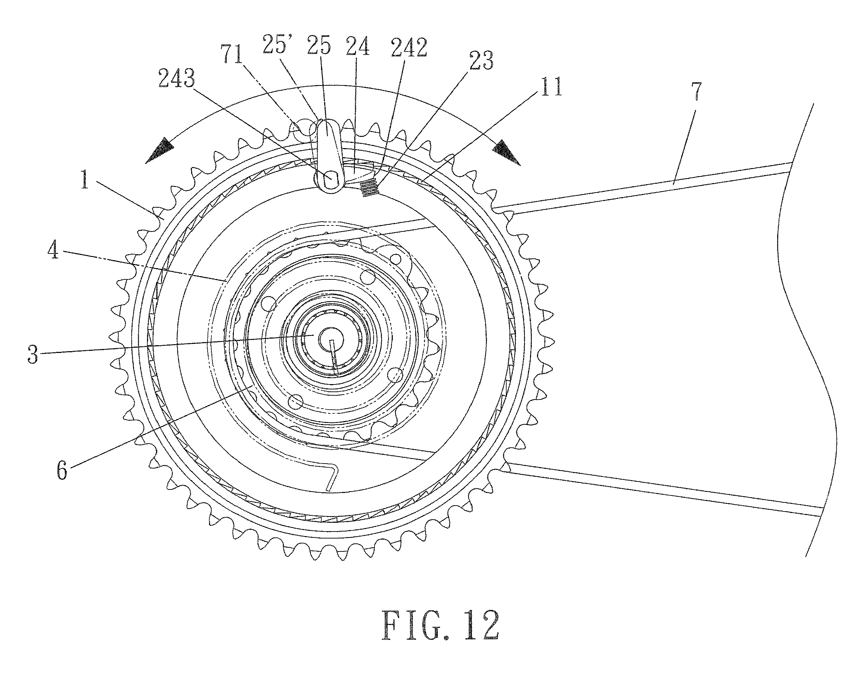

It is noted that the shape of the teeth on the outer periphery of the ring gear 1 can be those disclosed in Fig. 12.

The pawl 24 is not engaged with the ratchet teeth 11 of the ring gear 1 when the bicycle or scooter does not move so that the ring gear 1 can be rotated in either directions, and this means that the bicycle or scooter can be moved backward.

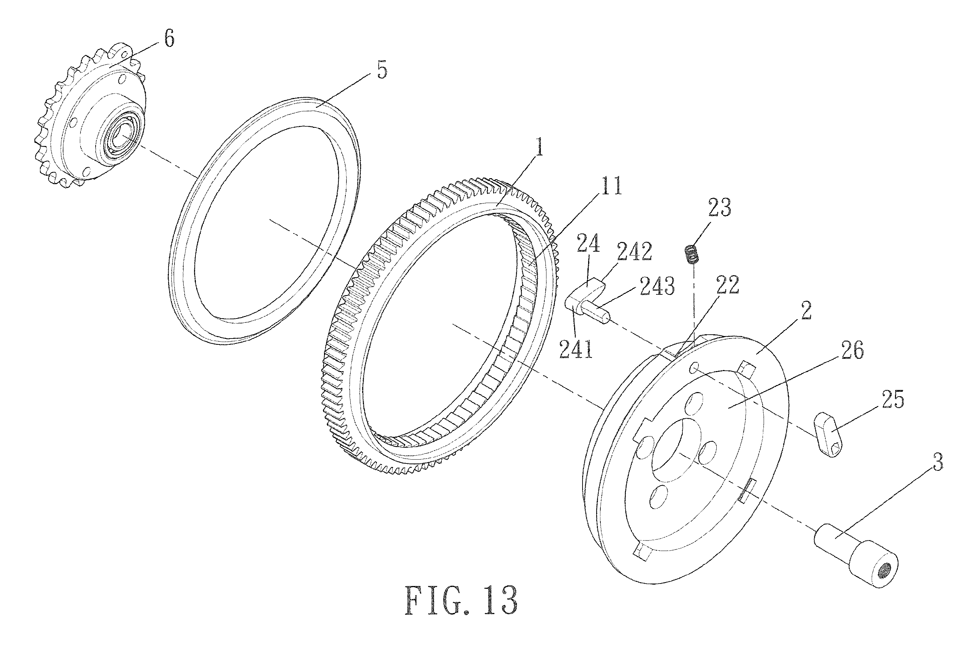

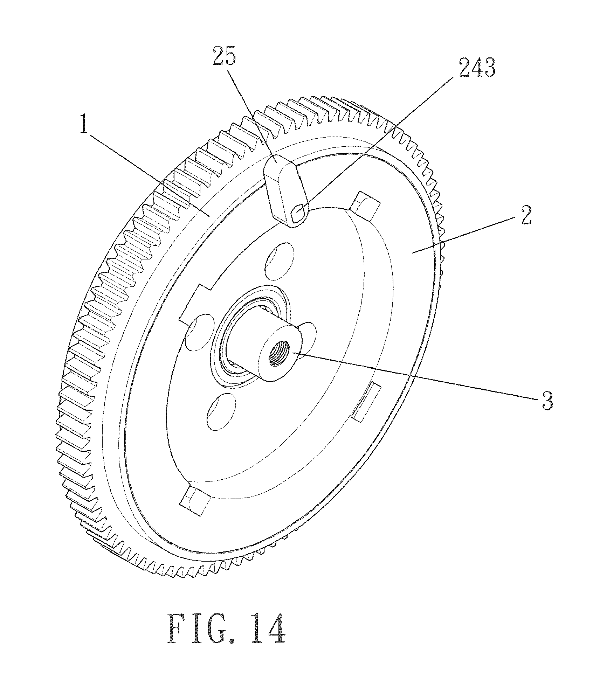

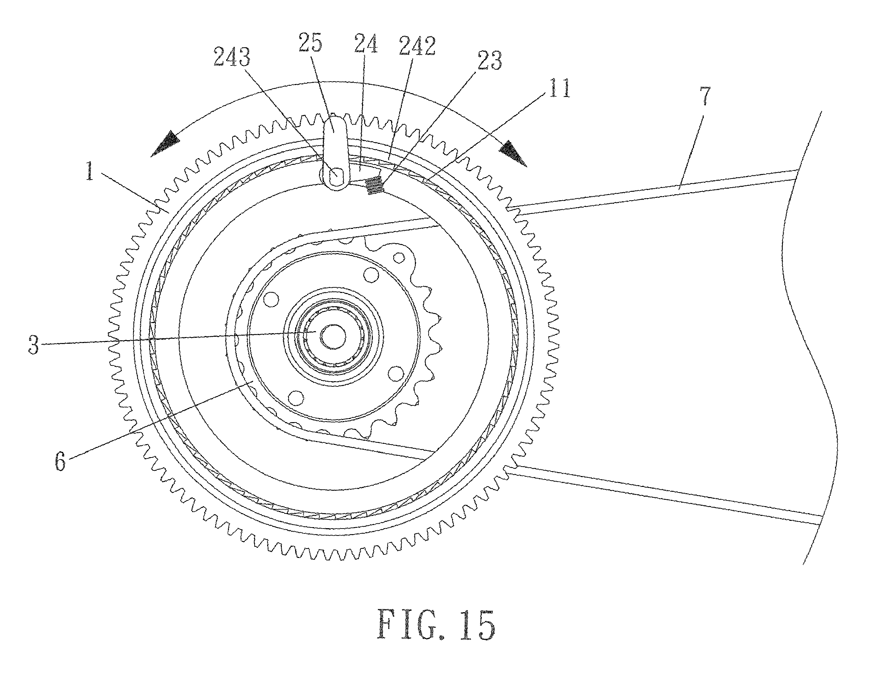

Figs. 13 to 15 show another embodiment of the gear assembly of the present invention, wherein the second embodiment is the same to the first embodiment except for the lack of the coil spring. When the transmission device7 rotates the driving gear 6 clockwise, the shaft 3 is rotated in the same direction and the pawl 24 is engaged with the ratchet teeth 11 so that the ring gear 1 rotates clockwise. When the user operates the control lever 25 to pivot the pawl 24 to disengage from the ratchet teeth 11 of the ring gear 1, the ring gear 1 which is connected the wheel of the bicycle or scooter, can freely rotate in either directions.

While we have shown and described the embodiment in accordance with the present invention, it should be clear to those skilled in the art that further embodiments may be made without departing from the scope of the present invention.

## Claims

1. A gear assembly comprising:
a ring gear having teeth defined in an outer periphery thereof and ratchet teeth defined in an inner periphery of the ring gear;
a body having a protrusion extending from a first side thereof and a recessed area defined in a second side of the body, the protrusion having a recess defined in an outer periphery thereof and a notch defined in an inner end of the recess, a pawl pivotably located in the recess and a spring located in the notch, the pawl being biased by the spring, the ring gear mounted to the protrusion and the pawl engaged with the ratchet teeth of the ring gear, the pawl including a link which extends through the body and fixed to an end of a control lever, the pawl being disengaged from the ratchet teeth by rotating the control lever;
a shaft extending through the body and fixed to a driving gear which is located on the first side of the body;
a coil spring received in the recessed area and having a first end fixed to the shaft, a second end of the coil spring fixed to the body, and
a cover connected to the first side of the body.

## Amended claims

### Amended claims in accordance with Rule 137(2) EPC.

**1.** A gear assembly comprising:
a ring gear having teeth defined in an outer periphery thereof and ratchet teeth defined in an inner periphery of the ring gear;
a body having a protrusion extending from a first side thereof and a recessed area defined in a second side of the body, the protrusion having a recess defined in an outer periphery thereof and a notch defined in an inner end of the recess, a pawl pivotably located in the recess and a spring located in the notch, the pawl being biased by the spring, the ring gear mounted to the protrusion and the pawl engaged with the ratchet teeth of the ring gear, the pawl including a link which extends through the body and fixed to an end of a control lever, the pawl being disengaged from the ratchet teeth by rotating the control lever;
a shaft extending through the body and fixed to a driving gear which is located on the first side of the body;
a coil spring received in the recessed area and having a first end fixed to the shaft, a second end of the coil spring fixed to the body;
a cover connected to the first side of the body, and
a push device fixedly located beside the control lever and pushing the control lever an angle to pivot the pawl to be disengaged from the ratchet teeth, such that the wheel is freely rotated in clockwise and counter clockwise directions.
